# EUROPEAN PATENT SPECIFICATION

(11) **EP 3 332 205 B1**
(45) Date of publication and mention of the grant of the patent: **23.06.2021**
(21) Application number: 16750244.2
(22) Date of filing: 05.08.2016
(51) Int. Cl.: F28D 20/00, F24D 17/00, F24D 19/10, F24H 1/20, F24H 9/20, F28D 7/02, F28D 7/08

(54) **IMPROVEMENTS IN SYSTEMS FOR HEATING WATER**
VERBESSERUNGEN AN SYSTEMEN ZUM ERWÄRMEN VON WASSER
PERFECTIONNEMENTS APPORTÉS À DES SYSTÈMES DE CHAUFFAGE DE L'EAU

(30) Priority: 06.08.2015 GB 201513943
(43) Date of publication of application: 13.06.2018
(73) Proprietor: Oxford University Innovation Limited, Botley Oxford OX2 0JB (GB)
(72) Inventor: ARMSTRONG, Peter, Cassington Oxfordshire OX29 4DB (GB); KANG, Ren, Cassington Oxfordshire OX29 4DB (GB); MCCULLOCH, Malcolm, Oxford Oxfordshire OX1 3PJ (GB)
(74) Representative: McShane, Andrea Renata
(86) International application number: PCT/GB2016/052454
(87) International publication number: WO 2017/021743

(56) References cited:
- GB-A- 2 505 233
- GB-A- 2 515 768
- JP-A- H09 269 147
- JP-A- 2001 343 157
- JP-A- 2006 029 780
- JP-A- 2006 105 528
- US-A1- 2015 110 478

## Description

This invention relates to the heating of water in hot water storage tanks. In particular, this invention provides a system and method for heating water with a hot water storage tank.

In hot water systems incorporating a hot water storage tank, the hot water storage tank may be supplied with cold water, which is heated by a heat exchanger disposed within the hot water storage tank, rather than being supplied with hot water directly from the central heating system.

This type of hot water system is often referred to as an 'indirect' heating system, and may be used when the central heating system also supplies hot water to radiators to avoid the water in the hot water storage tank becoming contaminated by residue from the radiators, which would make the water unusable for washing.

An efficient method of storing heat in a hot water storage tank is to allow a thermocline to develop in a vertical water column, which is generally achieved by minimising mixing of the vertical water column as the water is heated. This may also be known as thermal stratification.

The heat exchanger disposed inside an 'indirectly heated' hot water tanks may be in the form of a helical coil. It is desirable to position the heat exchanger as close to the bottom of the tank as possible to ensure that the highest possible heat transfer is achieved from the heat exchanger into the cold stratified water present at the base of the tank.

Hot water storage tanks need to be sterilised periodically, which can be achieved by heating the water stored in the tank to a suitable sterilisation temperature. However, a heat exchanger alone typically cannot transfer heat sufficiently to the lower regions of the tank and therefore such systems may fail to attain a required sterilisation temperature throughout the stored volume of water, so it is difficult to ensure that a tank is fully sterilised.

A possible solution to this problem is to install an auxiliary heater, such as an immersion heating element, at the base of the tank to 'boost' the heating of the water to the required sterilisation temperature.

A heat exchanger optimally positioned in the base of the tank to achieve the highest possible heat transfer encroaches on the space that a heat exchanger could otherwise occupy towards the base of the tank where it will operate most efficiently, and therefore a compromise is required. Furthermore, it has been found that even when an auxiliary heater is positioned close to the base of a tank the entire volume of the tank generally fails to attain a sufficient sterilising temperature. This is because the time lag to sterilisation due to the clearances between the bottom of the heater and the base of the tank can be in the order of hours after the majority of the rest of the water has attained a sufficient sterilisation temperature.

Another problem with conventional hot water systems is that the size of a hot water storage tank specified for most domestic dwellings is typically determined by the number of rooms in the building so that the maximum possible occupancy is accommodated. As a consequence, where there is a single occupant in a multi-bedroom dwelling, the tank installed may often be oversized relative to the requirements, resulting in unnecessary heating costs.

An system and method according to the preamble of claim 1 and 15 is known from the patent JP H09 269147. In the light of the above-described problems, the present invention aims to provide an improved system and method for heating water in a hot water storage tank. Aspects and embodiments of the present invention are set out in the appended claims. These and other aspects and embodiments of the invention are also described herein.

According to the present invention there is provided a system for heating water in a hot water storage tank, comprising: a heater; and means for drawing water onto the heater to be heated from beneath the heater.

By drawing water onto the heater to be heated from beneath the heater, the efficiency of heating of the water can be improved. By heating cold water drawn from beneath the heater, energy going into the heater produces almost instantly available heated water while avoiding the waste of exergy through stirring and/or natural convection of heat from colder water below. Thus, the amount of heated water available for instantaneous use can be optimised, and in doing so the heat losses associated with tanks that may be oversized for the number of occupants in a building may be reduced.

As water drawn from beneath the heater is heated by the heater, it displaces a thermocline in the stored heated water in the tank below it downwards. Thus, when incorporated into a hot water tank, particularly a tank having a heat exchanger installed in the base of the tank, the invention may have the effect of pushing the thermocline all the way to the base of the tank, thereby effectively ensuring that full sterilisation of the tank can be reliably and quickly achieved during steady state operation without the need for an auxiliary heater to be provided in the base of the tank.

By enabling the heat exchanger to be moved to a lower position in a tank, while maintaining the ability for the tank to be adequately sterilised, the heat exchanger will, on average, be immersed in colder water than if it were positioned above an auxiliary heater. This can enhance both the heat transfer coefficient and coefficient of performance of any heat pump that is discharging thermal energy into the stored water via the heat exchanger. In addition, the installation cost associated with wiring and fitting the overall hot water system may be reduced.

Preferably, the means for drawing water is arranged to draw cold water onto the heater. Preferably, the means for drawing water is arranged to draw water from the base of the storage tank. The base is where the stored water is typically at its coldest in a stratified tank.

The means for drawing water may comprise a fluid conduit that is external of the storage tank. This arrangement is simple to retrofit to a tank and, furthermore, does not take up any storage volume in the tank. Preferably, the fluid conduit extends between a fluid outlet and a fluid inlet on the storage tank, with the fluid outlet being lower than the fluid inlet on the tank, when in use.

Preferably, a pump is configured to draw fluid along the fluid conduit. This can help the system draw water against gravity. The pump may be configured to provide a flow rate of between about 0.2 litres/min and 15 litres/min. The pump flow rate may be between about 0.2 litres/min and 3 litres/min for a typical heater rated at 3kW. The pump may be controllable such that the flow rate of the drawn water can be controlled. Dwell time of water on or around the heater can thus be controlled, and hence also the temperature of the heated drawn water. The pump may be arranged in-line with the fluid conduit.

Preferably, the means for drawing water further comprises a non-return valve. This can prevent cold water being drawn up the fluid conduit during a large draw event from the storage tank. Preferably, the non-return valve is configured to open at a threshold pressure of at least 0.01 MPa, and more preferably a pressure of at least about 0.1 MPa, which pressure is greater than that of a draw event but can be easily overcome by the pump. Preferably, the non-return valve is arranged in-line in the fluid conduit. Preferably, the non-return valve is arranged downstream of the pump. This arrangement may allow the pump to create a sufficient pressure build up in the water behind the non-return valve to cause it to open.

Preferably, the means for drawing water is arranged to prolong the dwell time of water proximate to the heater. This may allow more time for the drawn water to be heated. Preferably, the means for drawing water is arranged to channel the flow of water at least partway along the length of the heater. Channelling the flow of water along the heater may ensure that the water remains close to the heater, for optimum heating efficiency. The means for drawing water may comprise a cover arranged to shroud at least part of the heater. This is a convenient arrangement to keep drawn water close to the heater. The cover may be arranged to be secured to a wall of the storage tank with the heater substantially enclosed within.

The means for drawing water is, preferably, arranged to feed drawn water into the cover. The means for drawing water may further be arranged to generate swirl in the drawn water as it is fed into the cover.

The cover is provided with one or more openings through which drawn water can discharge, ideally such that minimal disruption is caused to the stratified water into which it is discharging. The one or more openings are, preferably, spaced from the region of the cover where drawn water is fed into the cover, such that drawn water fed into the cover must pass at least part of the heater before it can discharge through the one or more openings. The one or more openings may be configured to control the flow direction of heated water as it discharges out of the cover. The one or more openings may be configured to control the flow rate of the heated water in different directions as it discharges out of the cover. The one or more openings may be of non-uniform size, shape and/or distribution about the cover, such that a flow of heated water can be directed in a particular direction. The openings may be a series of holes spaced-apart around the cover, for example and/ or an end portion of the cover (which portion attaches to the tank, for example) may be castellated, at least in part.

The cover is arranged substantially to enclose said at least part of the heater. The cover may be arranged to have a substantially round or cylindrical portion that contains said at least part of the heater. The cover may have two ends, optionally which ends may be arranged in a substantially opposed configuration. The cover may be closed at one end and open at the other end, for example the one or more openings may be provided towards the open end. The cover may be arranged such that water is fed into it towards the closed end, whereby the water has to pass over said at least part of the heater before it can exit the cover at an open end of the cover, which is preferably spaced from the closed end.

The cover may be a substantially round or cylindrical container, preferably wherein the cover is arranged as a canister, for example. The cover may be arranged to enclose substantially the entire heater (or at least the entire portion of heater that emits heat), for example to provide a self-contained heater assembly. Such a self-contained heater assembly may have a fluid inlet and a fluid outlet, whereby the heater assembly could be arranged in-line in a fluid conduit, which may be external of a water storage tank, for example.

The heater may be a heat exchanger disposed inside the storage tank, the heat exchanger preferably being arranged to receive a heated fluid from an external heat source. Said heater may further comprise an immersion heater, for example in addition to the internal heat exchanger. Alternatively, the heater may be an immersion heater arranged to be mounted in an immersion heater port on a wall of the storage tank.

The immersion heater preferably comprises at least one heating element having a power rating of between about 0.5kW and 10kW, preferably between about 1kW and 5kW more preferably between about 2kW and 4kW, and even more preferably about 3kW.

Optionally, the water may be heated external to the tank. At least one heat exchanger may be arranged external to the tank, wherein the heat exchanger is arranged to heat the water before it reaches the heater. The at least one heat exchanger may be a plate heat exchanger, for example supplied with heated water from a boiler or heat pump. A second heat exchanger, wherein at least one of the heat exchangers is supplied with waste heat harvested from heat-emitting electronic componentry, such as a microprocessor or a central processing unit (CPU) in a computer or a computing application.

An electric heater may arranged in series with the two heat exchangers, optionally wherein the electric heater is an immersion heater disposed inside the tank, preferably wherein at least part of the immersion heater is shrouded. Optionally, a diffuser element may be disposed inside the tank proximate to a fluid inlet of the tank, wherein the diffuser element is arranged to diffuse water as it enters the tank via said inlet. The fluid inlet may be arranged to inlet fluid towards the top of the tank, for example via an immersion port. Preferably, the water to be heated by the heater may be drawn from the base of the tank and then heated by the heater before being reintroduced into the tank via a fluid inlet at which the diffuser element is positioned. The heater may be arranged external to the tank.

The system may further comprise means for sensing the temperature of the heated water. The system may further comprise means for controlling the heater to heat drawn water to a desired temperature. The system may further comprise means for controlling the flow rate of water being drawn onto the heater. The system may further comprise a thermocline sensor arranged to determine the position of a thermocline in the water stored in the storage tank. The system may further comprise a user interface arranged to receive a user input indicating that a particular draw event is required, determine a time period until a predetermined volume of heated water associated with the indicated draw event is available; and display the determined time period to the user.

The invention can be used to adjust a volume of hot water heated within the tank to reflect demand, reducing heat losses as a result. For example, a user may demand that sufficient water be made available to perform a task, such as to wash the dishes. The invention may be able to provide sufficient hot water in, say, only five minutes compared with, say, two hours in a conventional hot water tank, and at considerably reduced cost of energy.

According to another aspect of the invention there is provided a (hot) water storage tank incorporating a system as described above. A hot water storage tank may incorporate multiple heaters, preferably with each being enclosed in a separate cover, according to another aspect of the invention.

Optionally, the heater may be a heater or heat exchanger as described herein.

The method may further comprise sensing the temperature of the drawn water heated by the heater; and controlling the heater to heat the drawn water to a desired temperature.

The method may further comprise sensing the temperature of the drawn water heated by the heater; and controlling the flow rate of the drawn water onto the heater such that the drawn water is heated to a desired temperature by the heater.

The method may further comprise monitoring the position of the thermocline in the storage tank to determine a volume of heated water, preferably which is at the desired temperature, that is available, for example to indicate a state of charge of the storage tank.

The method may further comprise controlling the supply of energy to the heater based on the determined volume of available heated water. Optionally, the supply of heat is controlled based on a difference between the determined volume of available heated water and an expected volume of available heated water. The heater may be a heat exchanger, which may be positioned external of the tank for example. Optionally, a (further) heat exchanger may be provided, preferably wherein the (further) heat exchanger is arranged in series with said heater, and preferably wherein the heat exchanger is configured to pre-heat water before it reaches said heater.

The method may further comprise positioning a diffuser element inside the tank, wherein the diffuser element is arranged to intercept the heated water as it enters the tank so as to diffuse the flow of water.

According to another aspect of the invention, there is provided a method of supplying energy to a heater arranged to heat water for storing in a hot water storage tank, comprising: monitoring the position of the thermocline in (a body of water held in) the storage tank; determining the volume of heated water that is available at a desired temperature based on the position of the thermocline; and supplying energy to the heater, for example based on a difference between the determined volume of available heated water and an expected volume of available heated water.

Optionally, in relation to controlling the supply of energy, the flow rate of the pump may be controlled to compensate for a fluctuating input of heat to the (further) heat exchanger alongside the heater to achieve the desired water temperature, for example at the top of tank or fluid outlet.

The method may further comprise receiving a user input indicating that a draw event is required from the hot water storage tank; determining a time delay required to ensure that a predetermined volume of water associated with the draw event is heated to a predetermined temperature; and informing the user of the determined time delay.

The method may further comprise determining an average volume of heated water, for example water heated to the desired temperature, taken from the storage tank over a predetermined period; and heating water drawn from beneath the heater until a volume of heated water roughly equal to the determined average volume of heated water used is available.

The method may further comprise heating the water according to the state of charge of the storage tank, for example as indicated by the position of the thermocline, preferably by supplying energy, for example heat, to the heater or heating means.

The method may further comprise arranging a heat exchanger to heat the water external to the tank; wherein the state of charge is used to control when energy is supplied to the heat exchanger.

Optionally, two heat exchangers may be arranged to (pre)heat the water external to the tank, with one of the heat exchangers (for example, a plate heat exchanger) being supplied with a constant source of energy, such as hot water from a boiler, and the other heat exchanger may be supplied with energy from a variable and/or controllable output, which can be dispatched upon demand or when desired, depending on the cost of the energy source and the state of charge of the tank, for example.

The (or each) heat exchanger may be arranged in series with the (or a) heater (for example the immersion heater), which is (or is arranged to be) disposed in a water storage tank, preferably such that water can be (pre)heated by the heat exchanger before being heated by the heater and introduced into the water storage tank. The water may be taken from the base of the water storage tank and heated before being reintroduced into the water storage tank. The heat exchanger is preferably arranged external to the water storage tank.

The pre-heated water is preferably (re)introduced into the tank via the heater assembly (as described herein), optionally which comprises a shroud surrounding at least part of the heater, such that the water is retained temporarily within the heater assembly (e.g. such that the dwell time of the water around the heater is increased) to be heated further before reaching the main body of water in the tank.

Optionally, the heat exchanger is arranged to transfer heat from a low grade renewable energy source, such as solar, thermal or heat pump, for example, preferably via a standard plate heat exchanger. Alternatively, the heat exchanger may be arranged to absorb waste heat from a heat emitting electrical component, such as a CPU, microprocessor, for example, which may comprise part of the control architecture, for example. The heat exchanger may be referred to herein as an 'additianial', 'further' or 'external' heat exchanger.

The control architecture may comprise a data processing chip adapted and/or programmed to undertake calculations for general commercial applications. Thus, the hot water tanks could potentially be used as "computing nodes" for finite element life science jobs, for example. The power to these "nodes" would fluctuate depending on the nature of the job; the control of the flow rate and or the heat to the heating element could be fluctuated to ensure a consistent thermocline is produced from the top of the tank. If the tank was fully charged, the processor may be instructed to stop performing calculations and/or dispatch the job to another tank in which there is spare capacity of cool water to heat.

As mentioned above, a means for and/or method of scheduling the supply of energy/heat to the (additional) heat exchanger may also be provided on the basis of a measurement of the 'state of charge' of the tank (for example, according to the available volume of heated water, preferably at a desired temperature). Similar to what is described above, multiple data jobs could potentially be scheduled depending on the individual state of charge as measured in the tanks, and a calculation of how much cooling capacity is left in each tank within a fleet of tanks.

Determining the 'state of charge' of the tank (for example, the available volume of heated water) may be achieved by using an array of thermos-sensitive elements arranged on a, preferably flexible, strip (not shown), comprising copper-coated polyamide (or PET) polymer, for example, preferably having an adhesive surface. The copper is arranged to provide electronic circuitry (or tracks) that connect the thermos-sensitive elements, preferably in series but the elements could also be connected in parallel or to a singular measurement point, or node. The copper circuitry (or tracks) may be etched onto the surface of the polymer. Other conductive coatings, e.g. other metals, could of course be used, as could other polymers.

The strip may be attached to the tank, preferably to a metallic outer surface of the tank, and preferably to a portion of the tank that contains water. Ideally, the strip extends along the wall of the tank, along substantially the length of the tank (or at least the portion of tank that contains water, in use), and is therefore in contact with the tank wall at points where the sensed temperature at the different elements may differ. For example, by determining the temperature at a position on the tank wall (via a thermos-sensitive element), the volume of water in the tank above, or indeed below, that temperature can be calculated, for example if the dimensions of the tank and the position of the element(s) are known.

In an example, the strip may be arranged to provide a sensor for measuring temperature of a fluid within a vessel, the vessel having a first region and a second region and the fluid having a temperature profile extending between the first region and the second region, wherein the sensor comprises an array of elements, each element having a temperature-dependent parameter, the array being capable of deployment within or adjacent the vessel such that the array extends along the vessel for measuring the temperature profile, the elements of the array being coupled together between an input and an output, the input being coupled or capable of being coupled to a driving source for driving the sensors, and the output being coupled or capable of being coupled to a detector for measuring an aggregate of the temperature-dependent parameter from the array of elements. Such a sensor may be referred to as a "thermocline sensor", for example.

The parameter may be resistance, impedance, inductance and/or capacitance. The elements of the array may be coupled together in series or in parallel. At least one of the elements of the array may comprise a thermistor. Preferably, the array of elements comprises at least one Positive Temperature Coefficient (PTC) resistor or at least one Negative Temperature Coefficient (NTC) resistor. Optionally, at least one of the elements of the array comprises a fixed value resistor, for example connected in parallel with a Positive Temperature Coefficient resistor or Negative Temperature Coefficient resistor.

Optionally, at least one of the elements of the array comprises a Positive Temperature Coefficient resistor connected in parallel with a Negative Temperature Coefficient resistor and in series thereto a fixed value resistor. Optionally, the Positive Temperature Coefficient resistor and/or Negative Temperature Coefficient resistor may be a nonlinear resistor. An element comprising a fixed value resistor in parallel with a PTC may be referred to as thermocline edge detectors (TEDs). A frequency interrogation method (e.g. selective interrogation of the elements) may be used to obtain independent temperatures from the elements, preferably using reactive elements to reduce the number of connections. An example of one such element, comprising a fixed value resistor in parallel with a PTC, may be referred to as thermocline edge detectors (TEDs). Such a sensor and arrangement is described in PCT application WO2014/087162, which is incorporated herein by reference.

The heater assembly is preferably disposed within the water storage tank, but optionally may be provided external to the tank. For example, the heater assembly may have a fluid inlet that receives fluid to be heated, and a fluid outlet that outlets heated fluid, wherein the inlet and outlet are positioned such that fluid entering the heater assembly must pass over the immersion heater (or similar heating means) before it can exit the heater assembly, such that (in use) fluid entering the heater assembly is heated before passing through the outlet. The fluid outlet may be arranged to introduce heated fluid into the water storage tank, preferably towards the top of the tank.

According to another aspect of the invention there is provided a heater assembly for heating water in a hot water storage tank, comprising: an immersion heater having a heating element; and means for shrouding at least part of the heating element.

Preferably, the heater assembly comprises a fluid inlet arranged to provide a fluid path into the water storage tank via the immersion heater. The fluid inlet may be arranged to extend at least partway along the length of the heating element.

The means for shrouding may be arranged to have one or more openings through which water can discharge, ideally without disturbing the surrounding stratified water into which it is discharged. The one or more openings in the means for shrouding may be spaced from the end of fluid inlet. The means for shrouding may be a cover having a length of between about 100mm and about 300mm, and preferably about 200mm. The means for shrouding may be a generally cylindrical cover, preferably having a diameter of about of about 40mm to about 150mm, and preferably about 100mm. The cover may be arranged as a canister, for example, which may be substantially round or cylindrical. The cover may be substantially closed at one end, and preferably arranged such that water fed into the cover has to flow past the heater (and thereby be heated, in use) before it can exit the cover.

The heater assembly may be configured to be mounted in an immersion port on a water storage tank. The means for shrouding is preferably arranged to be inserted through an immersion port of a water tank. The means for shrouding may be configured to expand once inserted through the immersion port. A temperature sensor may be arranged in the heater assembly to detect the temperature of the drawn water.

According to another aspect of the invention there is provided an immersion heater for a water storage tank, comprising a fluid inlet arranged to provide a fluid pathway into the water storage tank when mounted therein.

According to another aspect of the invention there is provided an immersion heater for a hot water storage tank, comprising: a plug arranged to be mounted in the hot water storage tank; and a heating element arranged to extend away from the plug into the hot water storage tank; wherein the plug is further arranged to provide a fluid inlet to the hot water storage tank.

Preferably, the immersion heater further comprises a tube that extends at least partially through the fluid inlet in the plug.

According to another aspect of the invention there is provided a water storage tank, comprising a heater assembly or immersion heater as described above. The water storage tank is preferably adapted for storing hot water.

According to another aspect of the invention there is provided a kit of parts, comprising: a heater for a hot water storage tank; and a cover arranged to be placed over the heater, for example when inside the hot water storage tank, such that the cover at least partially shrouds the heater.

The cover may be provided with one or more openings through which water can discharge, ideally without disturbing the surrounding stratified water into which it discharges. The cover may cover substantially the entire heater. The openings may be provided towards an end of the cover, wherein a substantially opposing end of the cover is substantially closed, preferably wherein the heater is received into the cover. The cover may be arranged to contain the heater, for example the cover may be arranged as a canister having a fluid inlet and a fluid outlet, such that the heater may be described as self-contained.

The cover may be arranged to be secured over the heater to a wall of a hot water storage tank, preferably an internal wall. The cover may be provided with one or more fixing points such that it can be secured to a wall of a water storage tank, preferably an internal wall, and preferably using a welding process. The heater may be an immersion heater or a heat exchanger.

The invention extends to a water storage tank, and/or a method of heating water, and/or a system for heating water, and/or an immersion heater, and/or a heater assembly, substantially as described herein and as illustrate in the accompanying figures.

As used herein, the term "tank" preferably connotes a cylinder, vessel or other suitable container for storing heated water, such as a water tank in a domestic hot water system.

As used herein, the term "beneath" preferably connotes below, lower down or further down, rather than directly underneath.

As used herein, the term "exergy" preferably connotes the energy that is available to be used in a system. When the system and surroundings have reached equilibrium, the exergy is zero.

As used herein, the term "self-contained" preferably connotes an assembly or arrangement that is complete, or having all that is needed, in itself. For example, a self-contained heater assembly may comprise a heating element contained within a canister, which is a complete and independent unit, in the context of the present invention.

As used herein, the term "shroud" preferably connotes to envelope, surround, enclose, obscure, cover or contain, for example.

As described herein, a heater or heating element may be "shrouded" such that water is caused to flow closely past the heating element such that it becomes heated. A shroud may be provided (for example, wrapped) about at least part of the heating element to cause fluid flowing past the heating element to remain in close proximity to said at least part of the heating element.

Furthermore, the heating element may be at least partially disposed within a housing or casing, for example, which may have an inlet and outlet at opposite ends of the housing/casing, or at the same end of the housing/casing but with a fluid flow path that causes fluid to flow past the heater element before it can exit the casing. Thus, the shroud may be a in the form of a can, or canister, for example; a 'housing' or 'casing', inside which the heater element is, at least in part, disposed. The can or canister may be substantially cylindrical.

When the heating element is, at least in part, substantially contained within such a 'housing', it may be disposed external to a tank. Such an arrangement may be described as 'self-contained'. The housing would preferably be provided with a fluid inlet and a fluid outlet to allow water to flow through the housing and be heated by the heating element contained inside.

While the invention has been described herein in relation to heating water, the skilled person will appreciate that the invention is not limited only to heating water and may potentially be used to heat any suitable fluid.

Any apparatus feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

An example of the present invention will now be described with reference to the accompanying figures, in which similar features may be labelled with corresponding reference numerals, and in which:
Figure 1A shows a first embodiment of a system for heating water in a hot water storage tank;
Figure 1B shows a close up of a heater used in the system shown in Figure 1A;
Figure 2 shows an example of a heater shrouded by a cover;
Figure 3 shows another example of a heater shrouded by a cover;
Figure 4 shows a first example of a cover secured to a relief dome of a tank;
Figure 5 shows a second example of a cover having a plurality of castellated openings;
Figure 6 shows a third example cover having a plurality of holes;
Figures 7A to 7C show an integral heater assembly;
Figures 8A to 8C show a second embodiment of a system for heating water in a hot water storage tank;
Figure 9 shows another embodiment of a system for heating water;
Figure 10 shows yet another embodiment of a system for heating water; and
Figure 11 shows exemplary control architecture for the system.

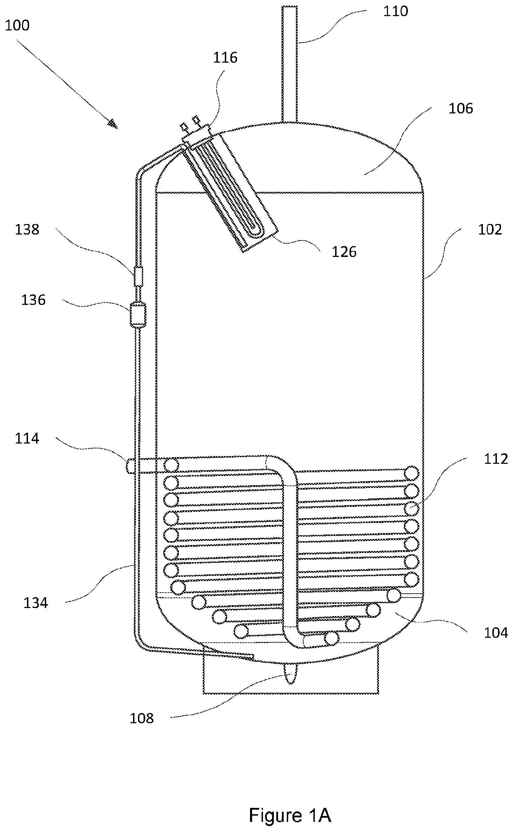

Figure 1A shows a system 100 for heating water according to a first exemplary embodiment of the invention, wherein the system 100 is incorporated into a hot water storage tank 102.

The tank 102 is generally cylindrical with a dome-shaped base 104 and a dome-shaped top 106, which may be referred to as "relief domes". A main 'cold' inlet 108 is arranged in the tank base 104 for filling and/or replenishing the tank 102 with water, preferably from a mains water supply, and a main 'hot' outlet 110 arranged in the tank top 106, through which heated water may be drawn for use. A heat exchanger 112 is disposed in the tank base 104 for heating the water, the heat exchanger 112 in this example being arranged as a helical coil tapered to contour with the domed shape of the base 104, and having an inlet/outlet 114 for connection to a heat pump, or similar heat source (not shown).

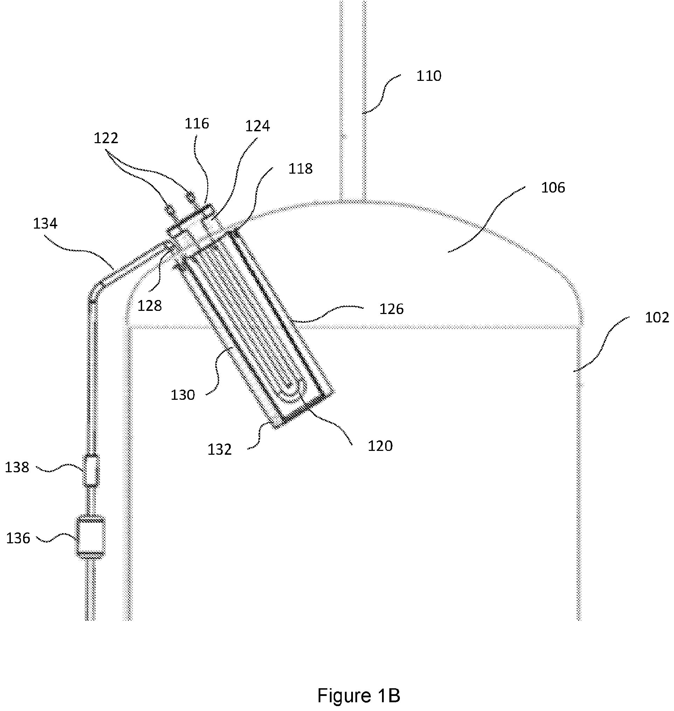

A heater 116 is disposed inside the tank 102. As can be seen in the enlarged view of Figure 1B, the heater 116 is mounted in a heater port 118 (sometimes referred to as an "immersion port") provided in the tank 102. The heater 116 is, preferably, arranged to be screwed into the port 118, which be provided with a threaded "boss" for that purpose.

A fluid connection 134 extends between the tank base 104 and the heater 116, the fluid connection being arranged to draw water onto the heater 116 to be heated from below the heater 116. The fluid connection 134 in this example is external of the tank 102. The fluid connection 134 may be referred to from herein as a "circulation tube", and incorporates a pump 136 that is arranged to circulate water through the circulation tube 134. The pump 136 is, ideally, suitable for use with potable water.

In this example, a non-return valve 138 is also provided to prevent cold water at the tank base 104 being drawn up the external circulation tube 134 during a draw event, where there might otherwise be a tendency for cold water to be drawn into the tank top 106. Preferably, the non-return valve 138 is configured to open at a threshold pressure, which can be achieved by the circulating pump 136, whereas a draw event is typically limited by the pressure drop of about 0.1 MPa (1 bar) at the inlet of a pump (not shown) upstream of the tank 102. If the pressure threshold to open the non-return valve 138 is above 0.1MPa (1 bar), the risk of cold water being drawn through the circulation tube during a draw event is eliminated. Of course, the requirement for a non-return valve 138 depends on the pressure drop in the tank 102 during a draw event.

The circulation tube 134, pump 136 and non-return valve 138 each form part of a water circulation loop that draws water from towards the base of the tank 102, where the water is cold, and feeds the drawn water back into the tank 102 higher up, preferably towards the top 106 of the tank 102. The water is drawn onto the heater 116 as it re-enters the tank 102. The circulation tube 134 may be connected to the cold inlet 108 just as it enters the tank base 104 via a T-piece connector (not shown). Alternatively, the circulation tube 134 may be brazed to a flared hole (not shown) provided in the tank base 104, for example.

The circulation tube 134 is fluidly connected to a dip tube 130 that provides a fluid path into the tank 102 via the heater 116, and hence via the heater port 118.

It is desirable to ensure that water drawn onto the heater 116 passes over as much of the heater 116 surface area as possible, so that the water can be optimally heated before it is discharged into the tank 102. A cover 126 is placed over the heater 116, substantially shrouding the heater 116. As drawn water is displaced through the cover 126 by the pump 136, it is heated by the heater 116 until it emerges hot through one or more openings 140 provided in the cover. Ideally, as the heated water discharges from the cover 126 it should cause minimal disturbance to the stratified water in the tank 102 into which it discharges.

The one or more openings 140 are ideally arranged in a region, preferably towards a distal end, of the cover 126 that is spaced (or remote) from the point at which water is fed into the cover 126. This helps to ensure optimal exposure of the drawn water to the heater 116 as it is displaced through the cover 126 before it discharges out of the cover 126. The dip tube 130 extends alongside the heater 116 and feeds water into the distal end of the cover 126 with the one or more openings 140 arranged at a proximal end of the cover, as shown in Figure 1B.

The dwell time of drawn water on, or near, the heater 116 can be dictated by the flow rate of the water through the cover 126. The flow rate can be adjusted by controlling the speed of the pump 136, and hence the system may be controlled to attain a desired discharge temperature of heated water corresponding to the dwell time.

It may also be desirable to provide one or more features inside the cover 126, such as a helical protrusion (not shown), that can induce swirl in the water as it flows through the cover 126, to improve the heat transfer coefficient.

The cover 126 preferably has a length of between about 100mm and about 300mm, and preferably has a diameter of about 40mm to about 150mm. The cover 126 may be secured to the wall of the tank 102, preferably either spot welded or TIG welded.

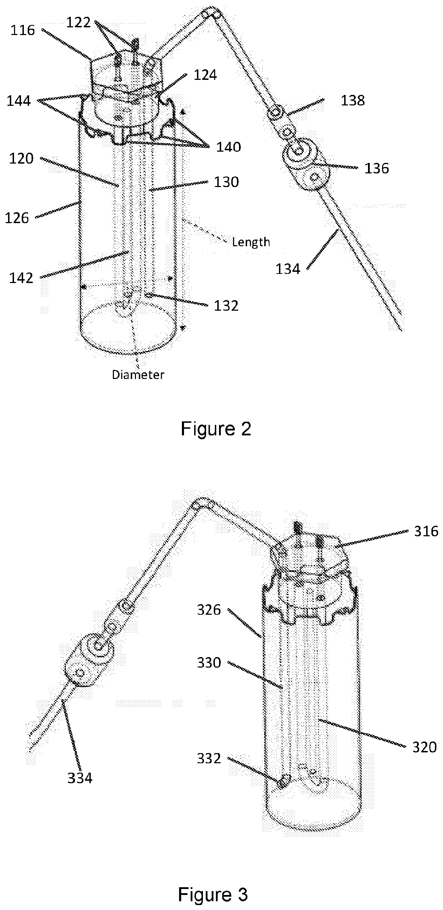

Figure 2 shows an exemplary arrangement of a heater 116 and a cover 126 in a tank 102. The heater 116 in this example is an "immersion heater", which includes a heating element 120 having terminals 122 for connecting the heating element 120 to an electrical power supply (not shown). The terminals 122 are housed in a 'plug' (or base) 124, which is arranged to be secured into the "immersion" heater port 118 provided in the tank 102, preferably via a screw-thread engagement.

When the plug 124 is mounted in the heater port 118, the terminals 122 are exposed outside of the tank 102, and the heating element 120 extends into the tank 102, as shown in Figure 1B. The immersion heating element 116 may further comprise a flange (not shown) that is arranged to rest on the exterior surface of the tank 102 to prevent the terminal housing 124 from falling into the tank 102.

Each heating element 120 may have an output of about 2.75kW to 3kW, and multiple heating elements 120 may be provided inside a cover 136. For example, four such 3kW heating elements 120 may be desired in a cover 136 to heat sufficient hot water to deliver a substantially instantaneous shower.

The circulation tube 134 shown includes a pump 136 and a non-return valve 138, as described above. For a 3kW heating element 120, a flow rate of up to about 3 litres/min might be desired. For multiple heating elements 120 inside the same cover 126, a flow rate of up to about 15 litres/min may be desired.

The rating of the heating element 120 is not limited to about 3kW, and may be higher or lower depending on the requirements of a system. For example, a heating element of up to 9kW, or beyond, may also be used, preferably in conjunction with a pump configured to feed it water at a higher flow rate, for example 15 litres/min, in a system from which large quantities of heater water might be demanded quickly. For example, a system may be required to deliver heated water at the rate of an electric shower at a time of day when energy prices are at a premium.

The dip tube 130 extends alongside the heating element 120 inside the cover 134. The dip tube 130 is connected to the circulation tube 134 via the terminal housing 124 of the heater 116, through which the dip tube 130 passes. The dip tube 130 has an outlet 132 arranged to feed water into the cover 126 at a distal, closed end of the cover 126, relative to the electrical terminals 122. A plurality of openings 140 are provided around the mouth of the cover 126, at a proximal end of the cover 126, such that the openings 140 are remote from the feed outlet 132.

A pocket 142, arranged to accommodate a mechanical thermostat probe and/or PT100 (resistance thermometer), thermocouple or thermistor based sensor, may also be provided inside the cover 136 as part of the system 100.

A series of tabs 144 are spaced around the open end of the cover 126 for securing it to a wall of a tank 102, preferably using a spot welding technique, as previously mentioned.

Figure 3 shows another embodiment of a heater 316 and cover 326 arrangement, similar to that shown in Figure 2, with the additional feature of an angled outlet 332 provided at the end of the dip tube 330. By having the angled outlet 332 of the dip tube 330 arranged to feed drawn water into the cover 326 at an angle tangential to the circumference of the cover 326, swirl can be induced in the water flow to enhance the heat transfer coefficient between the surface of the heating element 320 and the water within the cover 326.

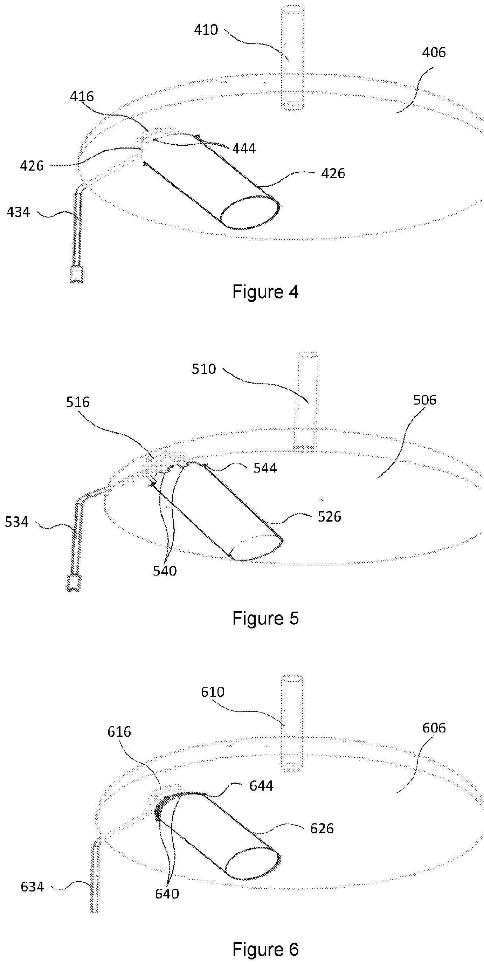

Figures 4 to 6 show three different exemplary embodiments of a heater 416, 516, 616 surrounded by a cover 426, 526, 626 arranged to discharge heated water into a hot water storage tank.

In Figure 4, a first embodiment of a cover 426 is shown having a straight edge at its open end, with no other openings in the cover 426. The cover 426 is secured to the underside of the relief dome 406 at the top of a tank. In this embodiment, water can discharge from the open end of the cover 426 via the clearances created between tabs 444 provided for securing the cover 426 to the tank, due to the curvature of the relief dome at the top 406 of the tank. This approach is simple in that minimal machining of the cover 426 is required, though less control of the water flow can be achieved through design. Furthermore, the clearances that are created between the tabs 444 in this embodiment may also be of a size that is prone to blockage from scale and other sources of debris that may be carried by the water.

In Figure 5 a second embodiment of a cover 526 is shown having castellated openings 540 spaced around an open end of the cover 526, similar to the exemplary covers 126, 326 shown in Figures 1 to 3. The castellated openings 540 may be quite sinuous and possibly non-uniform to reduce mixing as heated water is discharged from the cover 526. The openings 540 are preferably between about 5mm to about 20mm in depth, with ideally between about 2 to about 8 periods about the circumference of the cover 526.

In Figure 6, a third embodiment of a cover 626 is provided having a plurality of holes 640 around an open end of the cover 626. The size of the holes 640 may be varied to tune the flow rate. For example, it may be that slightly more flow is desired towards the side of the cover 626 facing the main outlet 108 of a tank because less water will be diverted downwards which could otherwise result in undesired mixing of water in the tank, which could disturb or otherwise affect the thermocline. The holes 640 may be between about 5mm and 10mm, for example and may not necessarily be of uniform size to minimise mixing of water and avoid blockage due to scale. Tabs 644 are also provided.

The covers may be fabricated from rolled stainless steel or copper, in which it is easier/quicker to laser/water/plasma jet cut a desired profile than to form a series of holes, as are provided in the cover 626 of Figure 6. The covers may also be formed of certain grades of polypropylene plastic that are approved for contact with potable water.

A heater 724 and a cover 726 may be provided as a single heater assembly 700, which can be screwed into the heater port 118 to simplify installation and allow the heater unit 700 to be retrofitted into existing hot water tanks. The cover 726 must be of a diameter that allows it to fit through the heater port 118, though the cover 726 could be arranged to expand once it has passed through the heater port 118 to provide a cover 726 having a larger diameter.

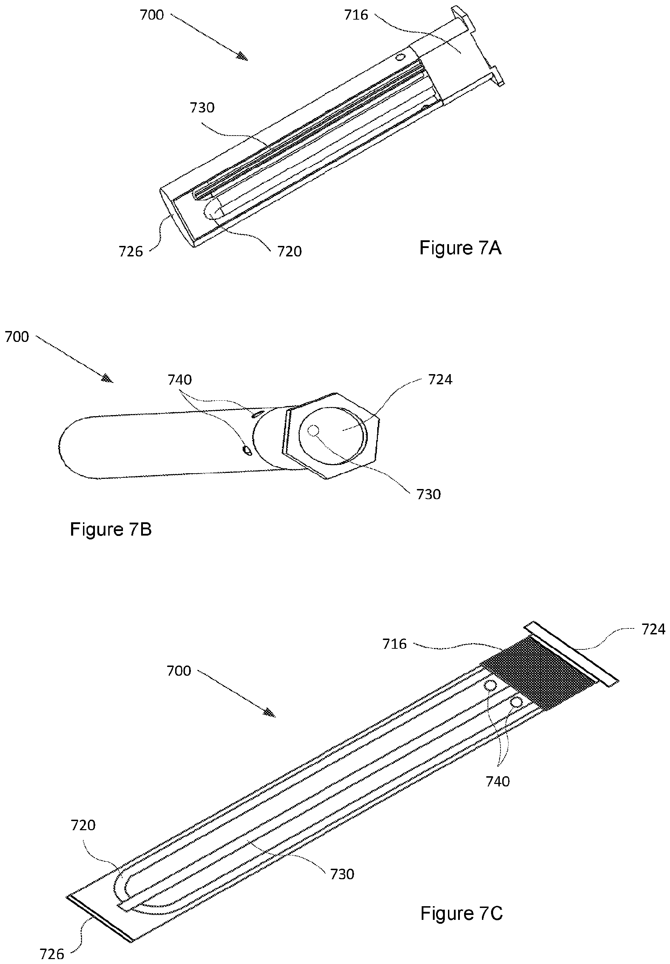

An example of a heater assembly 700, comprising an immersion heater 716 and a cover 726, is shown in Figures 7A to 7C. As can be seen in Figure 7A, the heating element 720 of the immersion heater 716 is shrouded by the cover 726, which is integral with the immersion heater 716. In other words, the heating element 720 is substantially contained by the cover 726. A dip tube 730 extends alongside the heating element 720 towards the distal end of the cover 726.

The dip tube 730 extends out through a plug 724 of the immersion heater 716, thereby providing a fluid pathway into the cover 726, as shown in Figure 7B. In use, the dip tube 730 may be connected to a fluid conduit, such as a circulation tube (not shown), to draw water from beneath onto the heater assembly 700 to be heated, as described earlier.

The plug 724 of the immersion heater 716 assembly 700 may be provided with an external screw thread that corresponds to a screw thread on an immersion boss (not shown) installed in the heater port 118 of the tank 102. One or more openings 740 are provided at a proximal end of the cover 726 that allow drawn water to discharge from the cover 726 once it has been heated, as can be seen in Figure 7C. The openings 740 here are, ideally, spaced from the end of the dip tube 730 to optimise the duration of time that the drawn water is heated before it discharges (into the tank) through the openings 740.

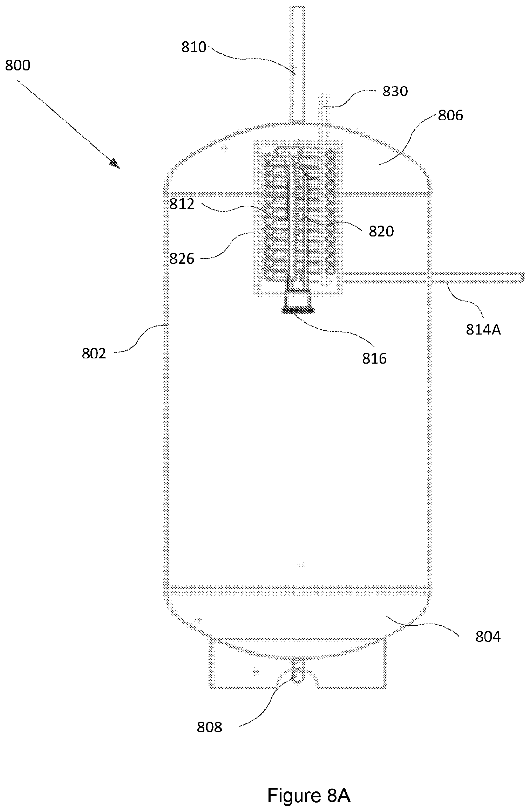

Figures 8A to 8C show a second exemplary hot water system 800, comprising a hot water tank 802 having a similar construction to the hot water tank 102 in Figure 1A, described above.

In this alternative system 800, a heat exchanger 812 for heating the water in the tank 802 is provided towards the top 806 of the tank 802. The heat exchanger 812 has an inlet 814A for receiving a heated fluid from a gas boiler, or another separate heat source, and an outlet 814B for returning the fluid to the heat source. In this regard, the heat exchanger 812 is similar in operation to the heat exchanger 112 in Figure 1A.

The heat exchanger 812 is enclosed by a cover 826 having a 'dip' tube 830 that extends into the cover 826 to feed drawn water into the bottom of the cover 826. A fluid connection (not shown) is arranged to draw water onto the heat exchanger 812 to be heated from lower down in the tank 802, as described earlier. One or more openings 840 are provided at the top of the cover 826, to allow heated water to discharge from the cover 826 once it has risen through the cover and been heated by the heat exchanger 812.

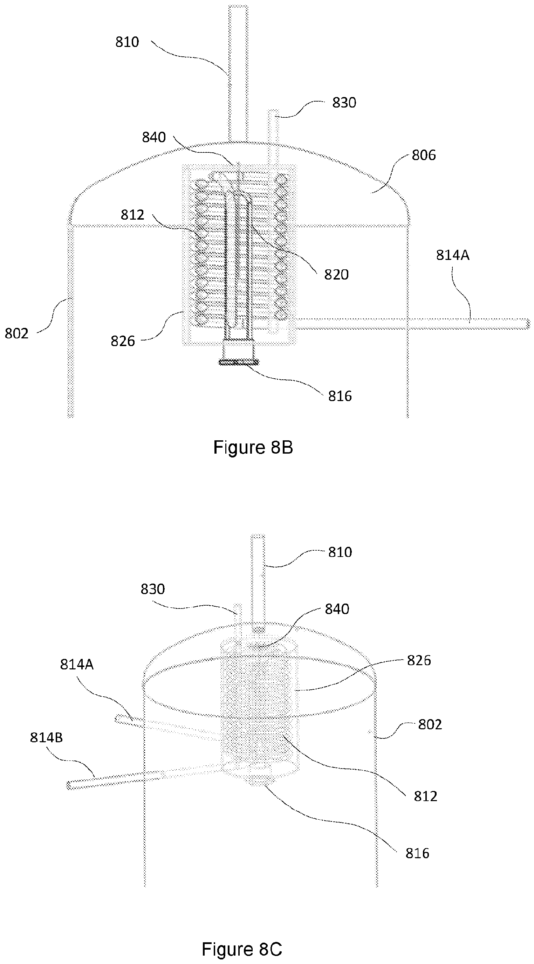

An additional heater 816 may also be provided as an auxiliary heat source to heat the drawn water in the tank 802. As illustrated in Figure 8B, the additional heater 816 is, ideally, an immersion heater having a heating element 820 that extends inside the cover 826 inside the tank 802. In practice, however, the immersion heater 816 may need to be electrically connected outside of the tank 802, though this will depend on the size of the heat exchanger 812.

Figure 8C shows an external view of the cover 826, enclosing the heat exchanger 812 and immersion heater 816, positioned inside a tank 802. The heat exchanger 812 has an inlet 814A and an outlet 814B for the heated fluid to flow to and from the external heat source (not shown).

In another embodiment (not shown) the heat exchanger 812 may be provided towards the top 806 of a tank 802 for heating water, as described above, but without the additional heater.

A heat exchanger might also be included in the tank base 104 if a heat pump or biomass boiler is connected to the system 800. A heat pump heated tank 802 may have both a gas coil and heat pump coil. By positioning a heat exchanger at the top of the tank, gas fired hot water storage tanks may be controlled to provide the same benefits around heat losses and speed of hot water production as the 'immersion heater' embodiment of the invention described earlier.

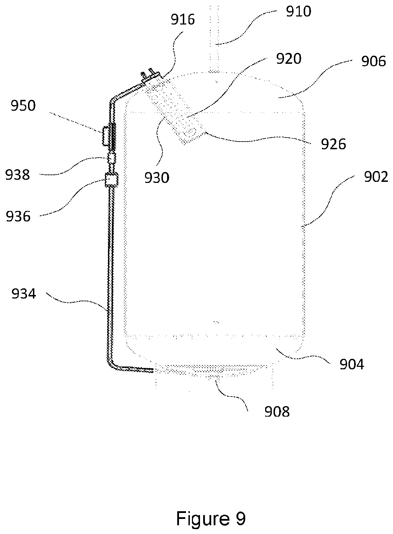

Figure 9 shows another embodiment of a system 900 for heating water. In this embodiment, a heat exchanger 950 is arranged in series with the heating element 920 that is disposed in the tank 902, which is shown here within a cover 926 shrouding the heating element 920. The heat exchanger 950 is arranged external to the tank 902, so that fluid taken from the base 904 of the tank 902 to be introduced towards the top 906 of the tank 902 via the fluid conduit 934 first passes the heat exchanger 950 before being introduced (back) into the tank 902, via the heating element 920. The heat exchanger 950 may therefore pre-heat the fluid.

The heat exchanger 950 may be arranged to transfer heat from a low grade renewable energy source (such as solar, thermal or heat pump) via a standard plate heat exchanger (not shown). Alternatively, the heat exchanger may be arranged to absorb waste heat from a microprocessor (not shown), for example.

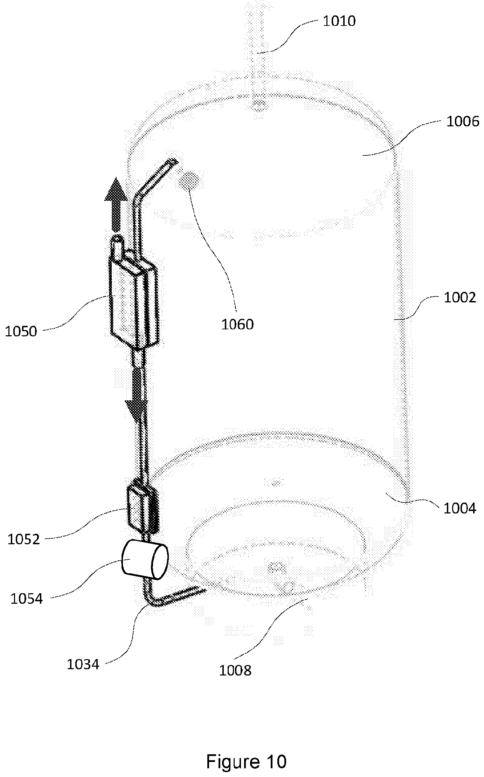

Figure 10 shows another exemplary embodiment of a water storage tank 1002, comprising two heat exchangers 1050, 1052. Similar to the example shown in Figure 9, the two heat exchangers 1050, 1052 are arranged to pre-heat water (in this example, which is extracted from the base of the tank 1002) before it is (re)introduced into the tank 1002.

The first heat exchanger 1050 is a 'plate' heat exchanger taking input, for example, from a heat pump water glycol circuit (the arrows show the direction of flow of the hot water / glycol mixture across the heat exchanger 1050). The second heat exchanger 1052 uses a secondary source of heat, for example (waste) heat emitted from a CPU/core processor (for example a CPU heat-harvesting arrangement).

Other types of heat exchanger may of course be utilised in the present invention.

In the example of a tank 1002 shown in Figure 10, a diffuser element 1060 is disposed inside the tank 1002. The diffuser element 1060 is positioned such that as pre-heated water is (re)introduced into the tank 1002 it immediately encounters the diffuser element 1060. This arrangement of a 'top' diffuser element 1060 helps to minimise the disturbance of the water already stored within the tank 1002 by the water being (re)introduced at the top of the tank 1002, for example to minimise disturbance to a thermocline that has been (or is being) established in the tank 1002.

The diffuser element 1060 is, ideally, disposed inside the tank 1002 at an end of the fluid conduit 'feed pipe' having a diameter of between around 6mm to 22mm, for example. The diffuser element 1060 may emerge from the feed pipe The diffuser element 1060 is, preferably, circular and may comprise '316 stainless steel' or a WRAS approved plastic material such as polyethylene, for example. The diffuser element 1060 itself, preferably, has a diameter of between around 35mm and 60mm in diameter. The diffuser element 1060, ideally, has a plurality of radially-spaced holes, and preferably circular holes of around 5mm to 15mm diameter.

Also in this example, a pump 1054 is shown arranged to pump fluid up through the fluid conduit 1034 and past the heat exchangers 1050, 1052 before being reintroduced into the tank 1002. The pump 1054 may have a variable control flow rate, which in the example shown may be controlled to attain a correct (or desired) temperature at the diffuser element by increasing or decreasing the flow of water into the tank 1002, as necessary.

The arrangement of two heat exchangers could of course also be used with a tank having an internal heater assembly, similar to the arrangement shown in Figure 9, or indeed with a heater assembly disposed externally of the tank (not shown), for example a heating element contained in a housing, such as a canister, substantially as described herein.

In another exemplary arrangement (not shown), a heater assembly comprising a heating element (such as an immersion heating element) substantially enclosed or shrouded (at least partially) within a housing (or casing) having a fluid input and a fluid output could alternatively / additionally be provided external to the tank. In this example, the heater assembly may be arranged such that water entering the housing is caused to flow past at least part of the heating element, such that the water is thereby heated before exiting the housing.

This externally disposed heater assembly may be arranged in-line with a fluid conduit that is arranged to extract water from the base of a water storage tank and reintroduce the water into the tank towards the top of the tank, such that the water is pre-heated by the heater assembly external to the tank before being reintroduced into the tank.

Such an 'external' arrangement may incorporate a diffuser element inside the tank, which is arranged to diffuse the pre-heated water as it is reintroduced into the tank, similar to the diffuser element 1060 described above with reference to Figure 10, for example.

Such an external arrangement may also be used with one or more heat exchangers, similar to those described above with reference to Figures 9 and 10, for example.

A further ('third') heating element (not shown), for example an electric heating element, may also be arranged in series with two heat exchangers further to pre-heat the water and/or add additional heating power, if and when required.

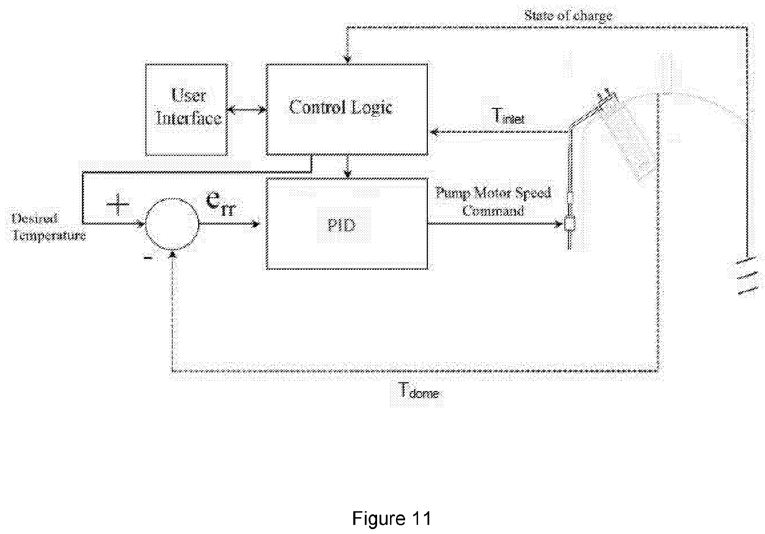

Figure 11 shows exemplary control architecture for controlling a variety of functions of the invention.

In a simple embodiment, a continuous proportional-integral-derivative (PID) controller can provide closed loop control of the speed of the pump 136 to ensure that there is a sufficient volume of water at a desired temperature available in the tank 102 to be drawn from the main outlet 110. The desired temperature would normally be about 60 degrees Celsius, which could be monitored using a temperature sensor arranged at the top 106 of the tank 102.

A higher level control logic can be used to control the heater 116 to increase the water temperature (up to 80 degrees Celsius, for example) in the event that there is surplus energy to store, for example when the bulk of the water is heated using renewable energy such as wind or photovoltaics), or to reduce the temperature to a lower temperature to reduce standing heat losses (down to 50 degrees Celsius, for example).

A temperature sensor may be provided at the inlet 118 where drawn water re-enters the tank 102 to inform the control logic when water in the tank 102 has attained an operating temperature. The temperature at the inlet may be used as an additional control parameter to modulate the speed of the water pump 136 more effectively.

A tank 102 'state of charge' sensor can be used to monitor the position of the thermocline in the tank 102 and hence determine a volume of heated water available for use. The state of charge sensor may be used to enable the system to determine the usage of the tank 102 and then the control logic can be used to move the thermocline to the correct position accordingly.

The control logic can be used to move the thermocline to a desired position in the tank 102, according to the average usage of the tank 102, by heating more or less drawn water. For example, if it is determined that the tank 102 is never more than half discharged, the thermocline could be moved down halfway towards the bottom of the tank 102, thereby ensuring that there is always sufficient hot water available for use.

Even if only part of the tank 102 is used, because of a single occupant in a large dwelling for example, it would still be desirable for the system to run a periodic sterilising cycle on the tank, ideally at least once a week, to ensure that bugs do not flourish. A sterilising cycle as referred to herein preferably connotes a process during which the entire volume of the tank 102, including the circulation loop 134, is heated to at least 50 degrees Celsius (more preferably at least 60 degrees Celsius) to sterilise the system.

A user interface could inform a user when a specific amount of hot water has been heated or how long the user is required to wait for an activity such as a bath or shower.

The water pump 136 would, ideally, be suitable for use with potable water (typically a brass pump impellor and housing would be specified). The water pump 136 could be driven by a DC brushed or AC brushless motor (i.e. switched reluctance, induction, permanent magnet, etc.). The drive circuitry might be a simple FET turning on and off at a particular frequency (e.g. at a constant frequency but with a variable duty cycle) in the case of a brushed motor. Alternatively, the drive circuitry might incorporate a variable frequency inverter for a brushless system.

With reference to the embodiment of Figure 9, for example, a control architecture may be adapted to modify the flow rate of water through the fluid connection 934, which feeds the internal heater arrangement 916, to ensure that a consistent temperature at the outlet 910 is maintained from the tank 902 by way of the internal heater 916 arrangement regardless of a varying thermal input from the additional heat exchanger 950. Similar control architecture may be used in the embodiment shown in Figure 10.

The power input to the immersion heating element 920 of the internal heater arrangement 916 may also be controlled to assist in maintaining a consistent temperature at the outlet 910. The supply of power to the heating element 920 may be controlled via on-off duty control using a Thyristor, solid state relay (SSR), insulated-gate bipolar transistor (IGBT) or other suitable switching device, ideally at the zero-crossings in the mains power supply, to ensure minimal harmonic distortion and electromagnetic emissions during operation.

Alternatively, the supply of power to the immersion heating element 920 might be controlled via high frequency pulse width modulation (PWM) of the current using an IGBT switching device, for example.

The heat (or power) supplied to the heat exchanger 950 may be controlled or scheduled based on a measurement of the state of charge of the tank 902.

For example, the supply of heat to the heat exchanger 950 may simply be controlled to be "On" or "Off". Optionally, the flow rate of fluid being pumped through or past the heat exchanger 950 may be controlled to compensate for a fluctuating input of heat to the heat exchanger 950 alongside the heating element to achieve the desired outlet temperature into the top of tank 902.

With reference to Figure 10, for example, the energy being provided to the heat exchanger 1050 may be a constant output from a boiler or heat pump, for example, whereas the energy being provided to the further heat exchanger 1052 may be a variable output, which can be dispatched depending on the cost of energy source and the state of charge of the tank, for example.

In the figures, similar features of different embodiments are labelled using similar, corresponding reference numerals.

It will be understood that the present invention has been described herein purely by way of example, and modifications of detail can be made within the spirit and the scope of the invention.

Furthermore, it will be appreciated that particular combinations of the various features described and defined in any aspects of the invention can be implemented and/or supplied and/or used independently.

## Claims

1. A system (100, 800) for heating water comprising:
a hot water storage tank (102, 802, 902),
a heater (116, 316, 416, 516, 616, 716, 724, 812, 816, 916) disposed inside the hot water storage tank (102, 802, 902); and
means (134, 334, 434, 534, 634) for drawing water onto the heater (116, 316, 416, 516, 616, 716, 724, 812, 816, 916) to be heated from beneath the heater, the means (134, 334, 434, 534, 634) comprising a cover (126, 326, 426, 526, 626, 726, 826, 926) arranged to shroud at least part of the heater (116, 316, 416, 516, 616, 716, 724, 812, 816, 916) and a tube (130, 330, 730, 830), **characterized in that** the tube (130,330,730,830) extends into the cover to feed drawn water into the cover,
and wherein the cover comprises one or more openings (140, 540, 640, 740, 840) arranged in a region that is spaced from the region of the cover where drawn water is fed into the cover, such that drawn water fed into the cover must pass at least part of the heater before it can discharge through the one or more openings.

2. A system according to Claim 1, wherein the means for drawing water is arranged to prolong the dwell time of water proximate to the heater and/or wherein the means for drawing water is arranged to channel the flow of water at least partway along the length of the heater.

3. A system according to Claim 1 or 2, wherein the means for drawing water is arranged to feed drawn water into the cover, and optionally wherein the means for drawing water is arranged to generate swirl in the drawn water as it is fed into the cover.

4. A system according to any preceding claim, wherein the cover is arranged to be secured to a wall of the storage tank with the heater substantially enclosed within.

5. A system according to any preceding claim, wherein the one or more openings have one or more of the following features:
being configured to control the flow direction of heated water as it discharges out of the cover;
being configured to control the flow rate of the heated water in different directions as it discharges out of the cover; and/or
being of non-uniform size, shape and/or distribution about the cover, such that a flow of heated water can be directed in a particular direction.

6. A system according to any preceding claim, wherein the cover is arranged to enclose substantially said at least part of the heater, preferably wherein the cover is arranged to enclose substantially the entire heater, for example wherein the cover is arranged as a canister.

7. A system according to any preceding claim, wherein the means for drawing water comprises a fluid conduit that is fluidly connected to the tube that extends into the cover and further comprising a pump configured to draw fluid along the fluid conduit.

8. A system according to any preceding claim, wherein the heater comprises an immersion heater preferably comprising at least one heating element having a power rating of between about 2kW and about 4kW, and preferably about 3kW.

9. A system according to any preceding claim, wherein the heater is a heat exchanger disposed inside the storage tank, the heat exchanger preferably being arranged to receive a heated fluid from an external heat source.

10. A system according to any preceding claim, further comprising at least one heat exchanger arranged external to the tank, wherein the heat exchanger is arranged to heat the water before it reaches the heater, optionally wherein the at least one heat exchanger is a plate heat exchanger, for example supplied with heated water from a boiler or heat pump.

11. A system according to any preceding claim, further comprising a diffuser element disposed inside the tank proximate to a fluid inlet of the tank, wherein the diffuser element is arranged to diffuse water as it enters the tank via said inlet.

12. A system according to any preceding claim, further comprising means for sensing the temperature of the heated water and optionally means for controlling the heater to heat drawn water to a desired temperature and/or means for controlling the flow rate of water being drawn onto the heater.

13. A system according to any preceding claim, comprising a thermocline sensor arranged to determine the position of a thermocline in the water stored in the storage tank.

14. A system according to any preceding claim, further comprising a user interface arranged to receive a user input indicating that a particular draw event is required, determine a time period until a predetermined volume of heated water associated with the indicated draw event is available; and display the determined time period to the user.

15. A method of heating water in a hot water storage tank (102, 802, 902), comprising the steps of:
providing a heater (116, 316, 416, 516, 616, 716, 724, 812, 816, 916) disposed inside the hot water storage tank (102, 802, 902), a cover (126, 326, 426, 526, 626, 726, 826, 926) arranged to shroud at least part of the heater (116, 316, 416, 516, 616, 716, 724, 812, 816, 916), and a tube (130, 330, 730, 830) that extends into the cover to feed drawn water into the cover,
wherein the cover comprises one or more openings (140, 540, 640, 740, 840) arranged in a region that is spaced from the region of the cover where drawn water is fed into the cover, such that drawn water fed into the cover must pass at least part of the heater before it can discharge through the one or more openings; and
drawing water onto the heater (116, 316, 416, 516, 616, 716, 724, 812, 816, 916) to be heated from beneath the heater (116, 316, 416, 516, 616, 716, 724, 812, 816, 916).

## Patentansprüche

1. System (100, 800) zum Erhitzen von Wasser, das Folgendes umfasst:
einen Warmwasserspeicher (102, 802, 902),
eine Heizung (116, 316, 416, 516, 616, 716, 724, 812, 816, 916), die innerhalb des Warmwasserspeichers (102, 802, 902) angeordnet ist; und
Mittel (134, 334, 434, 534, 634) zum Ansaugen von Wasser an die Heizung (116, 316, 416, 516, 616, 716, 724, 812, 816, 916) zum Erhitzen von unterhalb der Heizung, wobei das Mittel (134, 334, 434, 534, 634) eine Abdeckung (126, 326, 426, 526, 626, 726, 826, 926) zum Umhüllen zumindest eines Teils der Heizung (116, 316, 416, 516, 616, 716, 724, 812, 816, 916) und ein Rohr (130, 330, 730, 830) umfasst, **dadurch gekennzeichnet, dass** sich das Rohr (130, 330, 730, 830) in die Abdeckung erstreckt, um angesaugtes Wasser in die Abdeckung zu speisen, und
wobei die Abdeckung eine oder mehrere Öffnungen (140, 540, 640, 740, 840) aufweist, die in einem Bereich angeordnet sind, der von dem Bereich der Abdeckung beabstandet ist, in dem angesaugtes Wasser in die Abdeckung gespeist wird, so dass in die Abdeckung gespeistes angesaugtes Wasser zumindest einen Teil der Heizung passieren muss, bevor es durch die ein oder mehreren Öffnungen austreten kann.

2. System nach Anspruch 1, wobei das Mittel zum Ansaugen von Wasser zum Verlängern der Verweilzeit von Wasser in der Nähe der Heizung ausgelegt ist, und/oder wobei das Mittel zum Ansaugen von Wasser zum Kanalisieren des Wasserstroms zumindest teilweise entlang der Länge der Heizung ausgelegt ist.

3. System nach Anspruch 1 oder 2, wobei das Mittel zum Ansaugen von Wasser zum Speisen von angesaugtem Wasser in die Abdeckung ausgelegt ist, und wobei das Mittel zum Ansaugen von Wasser optional zum Erzeugen eines Wirbels in dem angesaugten Wasser ausgelegt ist, wenn es in die Abdeckung gespeist wird.

4. System nach einem vorherigen Anspruch, wobei die Abdeckung zum Befestigen an einer Wand des Speichertanks mit dem Heizgerät im Wesentlichen darin eingeschlossen ausgelegt ist.

5. System nach einem vorherigen Anspruch, wobei die ein oder mehreren Öffnungen eines oder mehrere der folgenden Merkmale aufweisen:
sie sind zum Steuern der Fließrichtung von erhitztem Wasser beim Austritt aus der Abdeckung konfiguriert;
sie sind zum Regeln der Durchflussrate des erhitzten Wassers in verschiedenen Richtungen konfiguriert, wenn es aus der Abdeckung austritt; und/oder
sie sind von ungleichmäßiger Größe, Form und/oder Verteilung um die Abdeckung, so dass ein Strom von erhitztem Wasser in eine bestimmte Richtung gelenkt werden kann.

6. System nach einem vorherigen Anspruch, wobei die Abdeckung so ausgelegt ist, dass sie im Wesentlichen mindestens den genannten Teil der Heizung umschließt, wobei die Abdeckung vorzugsweise so ausgelegt ist, dass sie im Wesentlichen die gesamte Heizung umschließt, wobei die Abdeckung zum Beispiel als Kanister ausgelegt ist.

7. System nach einem vorherigen Anspruch, wobei das Mittel zum Ansaugen von Wasser eine Fluidleitung, die mit dem sich in die Abdeckung erstreckenden Rohr fluidisch verbunden ist, und ferner eine Pumpe umfasst, die zum Ansaugen von Fluid entlang der Fluidleitung konfiguriert ist.

8. System nach einem vorherigen Anspruch, wobei die Heizung einen Tauchsieder umfasst, der vorzugsweise mindestens ein Heizelement mit einer Nennleistung zwischen etwa 2 kW und etwa 4 kW, vorzugsweise etwa 3 kW, umfasst.

9. System nach einem vorherigen Anspruch, wobei die Heizung ein innerhalb des Speichertanks angeordneter Wärmetauscher ist, wobei der Wärmetauscher vorzugsweise zum Aufnehmen eines erhitzten Fluids von einer externen Wärmequelle ausgelegt ist.

10. System nach einem vorherigen Anspruch, das ferner mindestens einen außerhalb des Tanks angeordneten Wärmetauscher umfasst, wobei der Wärmetauscher zum Erhitzen des Wasser ausgelegt ist, bevor es das Heizgerät erreicht, wobei der mindestens eine Wärmetauscher optional ein Plattenwärmetauscher ist, der beispielsweise mit erhitztem Wasser von einem Boiler oder einer Wärmepumpe versorgt wird.

11. System nach einem vorherigen Anspruch, das ferner ein im Inneren des Tanks in der Nähe eines Fluideinlasses des Tanks angeordnetes Diffusorelement umfasst, wobei das Diffusorelement zum Diffundieren des Wassers ausgelegt ist, während es über den Einlass in den Tank eintritt.

12. System nach einem vorherigen Anspruch, das ferner Mittel zum Erfassen der Temperatur des erhitzten Wassers und optional Mittel zum Steuern der Heizung, um angesaugtes Wasser auf eine gewünschte Temperatur zu erwärmen, und/oder Mittel zum Regeln der Durchflussrate von an das Heizgerät angesaugtem Wasser umfasst.

13. System nach einem vorherigen Anspruch, das einen Thermokline-Sensor umfasst, der zum Bestimmen der Position einer Thermokline in dem im Speicher gespeicherten Wasser ausgelegt ist.

14. System nach einem vorherigen Anspruch, das ferner eine Benutzeroberfläche umfasst, die zum Empfangen einer Benutzereingabe ausgelegt ist, die anzeigt, dass ein bestimmtes Ansaugereignis erforderlich ist, eine Zeitspanne bestimmt, bis ein vorbestimmtes Volumen an erhitztem Wasser in Assoziation mit dem angezeigten Ansaugereignis verfügbar ist; und die bestimmte Zeitspanne dem Benutzer anzeigt.

15. Verfahren zum Erhitzen von Wasser in einem Warmwasserspeicher (102, 802, 902), das die folgenden Schritte beinhaltet:
Bereitstellen einer Heizung (116, 316, 416, 516, 616, 716, 724, 812, 816, 916), die innerhalb des Warmwasserspeichers (102, 802, 902) angeordnet ist, einer Abdeckung (126, 326, 426, 526, 626, 726, 826, 926) zum Umhüllen zumindest eines Teils des Heizelements (116, 316, 416, 516, 616, 716, 724, 812, 816, 916) und eines Rohr (130, 330, 730, 830), das sich in die Abdeckung erstreckt, um angesaugtes Wasser in die Abdeckung zu speisen,
wobei die Abdeckung eine oder mehrere Öffnungen (140, 540, 640, 740, 840) aufweist, die in einem Bereich angeordnet sind, der von dem Bereich der Abdeckung beabstandet ist, in dem angesaugtes Wasser in die Abdeckung gespeist wird, so dass in die Abdeckung gespeistes angesaugtes Wasser zumindest einen Teil der Heizung passieren muss, bevor es durch die ein oder mehreren Öffnungen austreten kann; und
Ansaugen von Wasser an die Heizung (116, 316, 416, 516, 616, 716, 724, 812, 816, 916), um von unterhalb der Heizung (116, 316, 416, 516, 616, 716, 724, 812, 816, 916) erhitzt zu werden.

## Revendications

1. Système (100, 800) de chauffage d'eau comportant :
un réservoir de stockage d'eau chaude (102, 802, 902), un corps de chauffe (116, 316, 416, 516, 616, 716, 724, 812, 816, 916) disposé à l'intérieur du réservoir de stockage d'eau chaude (102, 802, 902) ; et
un moyen (134, 334, 434, 534, 634) servant à aspirer de l'eau jusque sur le corps de chauffe (116, 316, 416, 516, 616, 716, 724, 812, 816, 916) pour la chauffer depuis le dessous du corps de chauffe, le moyen (134, 334, 434, 534, 634) comportant un capot (126, 326, 426, 526, 626, 726, 826, 926) agencé pour envelopper au moins une partie du corps de chauffe (116, 316, 416, 516, 616, 716, 724, 812, 816, 916) et un tube (130, 330, 730, 830), **caractérisé en ce que** le tube (130, 330, 730, 830) s'étend jusque dans le capot pour alimenter l'eau aspirée jusque dans le capot, et
dans lequel le capot comporte une ou plusieurs ouvertures (140, 540, 640, 740, 840) agencées dans une région qui est espacée depuis la région du capot où l'eau aspirée est alimentée jusque dans le capot, de telle sorte que l'eau aspirée alimentée jusque dans le capot doit passer par au moins une partie du corps de chauffe avant qu'elle ne puisse être déchargée au travers desdites une ou plusieurs ouvertures.

2. Système selon la revendication 1, dans lequel le moyen servant à aspirer de l'eau est agencé pour prolonger le temps de séjour de l'eau à proximité du corps de chauffe et/ou dans lequel le moyen servant à aspirer de l'eau est agencé pour canaliser l'écoulement de l'eau au moins à mi-chemin le long de la longueur du corps de chauffe.

3. Système selon la revendication 1 ou la revendication 2, dans lequel le moyen servant à aspirer de l'eau est agencé pour alimenter l'eau aspirée jusque dans le capot, et éventuellement dans lequel le moyen servant à aspirer de l'eau est agencé pour générer des remous dans l'eau aspirée au fur et à mesure qu'elle est alimentée jusque dans le capot.

4. Système selon l'une quelconque des revendications précédentes, dans lequel le capot est agencé pour être assujetti sur une paroi du réservoir de stockage, le corps de chauffe étant sensiblement renfermé à l'intérieur.

5. Système selon l'une quelconque des revendications précédentes, dans lequel lesdites une ou plusieurs ouvertures ont une ou plusieurs des caractéristiques suivantes :
elles sont configurées pour commander la direction de l'écoulement de l'eau chauffée au fur et à mesure qu'elle se décharge hors du capot ;
elles sont configurées pour commander le débit d'écoulement de l'eau chauffée dans différentes directions au fur et à mesure qu'elle se décharge hors du capot ; et/ou
elles sont d'une taille, d'une forme et/ou d'une distribution non uniformes autour du capot, de telle sorte qu'un écoulement d'eau chauffée peut être dirigé dans une direction particulière.

6. Système selon l'une quelconque des revendications précédentes, dans lequel le capot est agencé pour renfermer sensiblement ladite au moins une partie du corps de chauffe, de préférence dans lequel le capot est agencé pour renfermer sensiblement la totalité du corps de chauffe, par exemple dans lequel le capot est agencé sous la forme d'une cartouche.

7. Système selon l'une quelconque des revendications précédentes, dans lequel le moyen servant à aspirer de l'eau comporte un conduit de fluide qui est raccordé de manière fluidique au tube qui s'étend jusque dans le capot et comportant par ailleurs une pompe configurée pour aspirer du fluide le long du conduit de fluide.

8. Système selon l'une quelconque des revendications précédentes, dans lequel le corps de chauffe comporte un thermoplongeur comportant de préférence au moins un élément chauffant ayant une puissance nominale entre environ 2kW et environ 4kW, et de préférence environ 3kW.

9. Système selon l'une quelconque des revendications précédentes, dans lequel le corps de chauffe est un échangeur de chaleur disposé à l'intérieur du réservoir de stockage, l'échangeur de chaleur étant de préférence agencé pour recevoir un fluide chauffé en provenance d'une source de chaleur externe.

10. Système selon l'une quelconque des revendications précédentes, comportant par ailleurs au moins un échangeur de chaleur agencé de manière externe par rapport au réservoir, dans lequel l'échangeur de chaleur est agencé pour chauffer l'eau avant qu'elle n'atteigne le corps de chauffe, éventuellement dans lequel ledit au moins un échangeur de chaleur est un échangeur de chaleur à plaques, par exemple fourni en eau chauffée en provenance d'une chaudière ou d'une pompe à chaleur.

11. Système selon l'une quelconque des revendications précédentes, comportant par ailleurs un élément diffuseur disposé à l'intérieur du réservoir à proximité d'une entrée de fluide du réservoir, dans lequel l'élément diffuseur est agencé pour diffuser l'eau au fur et à mesure qu'elle entre dans le réservoir par le biais de ladite entrée.

12. Système selon l'une quelconque des revendications précédentes, comportant par ailleurs un moyen servant à détecter la température de l'eau chauffée et éventuellement un moyen servant à commander le corps de chauffe pour chauffer l'eau aspirée jusqu'à une température souhaitée et/ou un moyen servant à commander le débit d'écoulement de l'eau qui est aspirée jusque sur le corps de chauffe.

13. Système selon l'une quelconque des revendications précédentes, comportant un capteur de thermocline agencé pour déterminer la position d'une thermocline dans l'eau stockée dans le réservoir de stockage.

14. Système selon l'une quelconque des revendications précédentes, comportant par ailleurs une interface utilisateur agencée pour recevoir une entrée d'utilisateur indiquant qu'un événement d'aspiration particulier est requis, déterminer une période de temps jusqu'à ce qu'un volume prédéterminé d'eau chauffée associé à l'événement d'aspiration indiqué soit disponible ; et afficher la période de temps déterminée à l'utilisateur.

15. Procédé de chauffage d'eau dans un réservoir de stockage d'eau chaude (102, 802, 902), comportant les étapes consistant à :
mettre en œuvre un corps de chauffe (116, 316, 416, 516, 616, 716, 724, 812, 816, 916) disposé à l'intérieur du réservoir de stockage d'eau chaude (102, 802, 902), un capot (126, 326, 426, 526, 626, 726, 826, 926) agencé pour envelopper au moins une partie du corps de chauffe (116, 316, 416, 516, 616, 716, 724, 812, 816, 916), et un tube (130, 330, 730, 830) qui s'étend jusque dans le capot pour alimenter l'eau aspirée jusque dans le capot,
dans lequel le capot comporte une ou plusieurs ouvertures (140, 540, 640, 740, 840) agencées dans une région qui est espacée par rapport à la région du capot où l'eau aspirée est alimentée jusque dans le capot, de telle sorte que l'eau aspirée alimentée jusque dans le capot doit passer par au moins une partie du corps de chauffe avant qu'elle ne puisse être déchargée au travers desdites une ou plusieurs ouvertures ; et
aspirer de l'eau jusque sur le corps de chauffe (116, 316, 416, 516, 616, 716, 724, 812, 816, 916) pour la chauffer depuis le dessous du corps de chauffe (116, 316, 416, 516, 616, 716, 724, 812, 816, 916) .
